# FASCICULE DE BREVET EUROPEEN

(11) **EP 3 294 504 B1**
(45) Date de publication et mention de la délivrance du brevet: **03.07.2019**
(21) Numéro de dépôt: 16722182.9
(22) Date de dépôt: 10.05.2016
(51) Int. Cl.: B25J 21/02, G21F 7/047

(54) **BRIDE ET PORTE DE CONTENEUR EN MATIERE PLASTIQUE A COMPENSATION DES TOLERANCES D'INJECTION POUR CONNEXION**
FLANSCH UND TÜR EINES KUNSTSTOFFBEHÄLTERS MIT AUSGLEICH VON EINSPRITZTOLERANZEN FÜR DIE VERBINDUNG
PLASTICS CONTAINER FLANGE AND DOOR WITH COMPENSATION OF INJECTION TOLERANCES FOR CONNECTION

(30) Priorité: 12.05.2015 FR 1554264
(43) Date de publication de la demande: 21.03.2018
(73) Titulaire: Glachet, Charles, 41100 Vendome (FR)
(72) Inventeur: Glachet, Charles, 41100 Vendome (FR)
(74) Mandataire: Brevalex
(86) Numéro de dépôt international: PCT/EP2016/060477
(87) Numéro de publication internationale: WO 2016/180839

(56) Documents cités:
- FR-A1- 2 633 254
- FR-A1- 2 986 364
- US-A1- 2003 155 846

## Description

Dans les jonctions étanches à double porte, sur la cellule (nommée aussi boîte à gant ou isolateur) est monté un ensemble composé d'une bride de cellule fixée sur la paroi de la cellule de façon étanche. Cette bride de cellule est obturée par une porte de cellule assurant une étanchéité par l'intermédiaire d'un joint généralement élastomère, de préférence de type à lèvres.

De tels ensembles sont réalisés généralement en acier inoxydable pour les brides de cellule et généralement en matière plastique pour les portes de cellules, moins pesant, ce qui facilite la manipulation des opérateurs. Le transfert d'objet se fait par l'intermédiaire de conteneurs composés d'une bride de conteneur comportant un joint d'étanchéité et une porte de conteneur réalisant une fermeture étanche de l'ensemble, à l'arrière de la bride de conteneur est rapporté un corps de conteneur avec son fond refermant un volume clos et étanche. Ces ensembles sont fréquemment en matière plastique usinée, ce qui permet de respecter les tolérances et de garantir les caractéristiques mécanique et d'étanchéité. Des réalisations ont été faites en pièces injectées avec un résultat négatif sur la dégradation des caractéristiques mécaniques et d'étanchéité. Cela est dû aux tolérances d'injection nettement supérieures à celles usinées, ce qui risque de remettre en cause l'utilisation de ces systèmes dit à double porte à ouverture rapide, dans le cas où les besoins nécessitent un grand nombre de conteneur du fait que leur coût devient insupportable.

La connexion du conteneur sur la bride de cellule est généralement réalisée par système dit à baïonnettes, des oreilles mâles du conteneur venant s'engager dans des oreilles femelles de la bride de cellule, suivi d'une rotation du conteneur d'environ 60° pour quatre oreilles équidistantes. Ceci a pour effet de verrouiller la bride conteneur sur la bride de cellule, de déverrouiller la porte du conteneur de sa bride de conteneur et de la verrouiller sur la porte de cellule.

Le nombre d'oreilles est généralement de quatre, des systèmes existent avec trois oreilles et d'autres avec six oreilles.

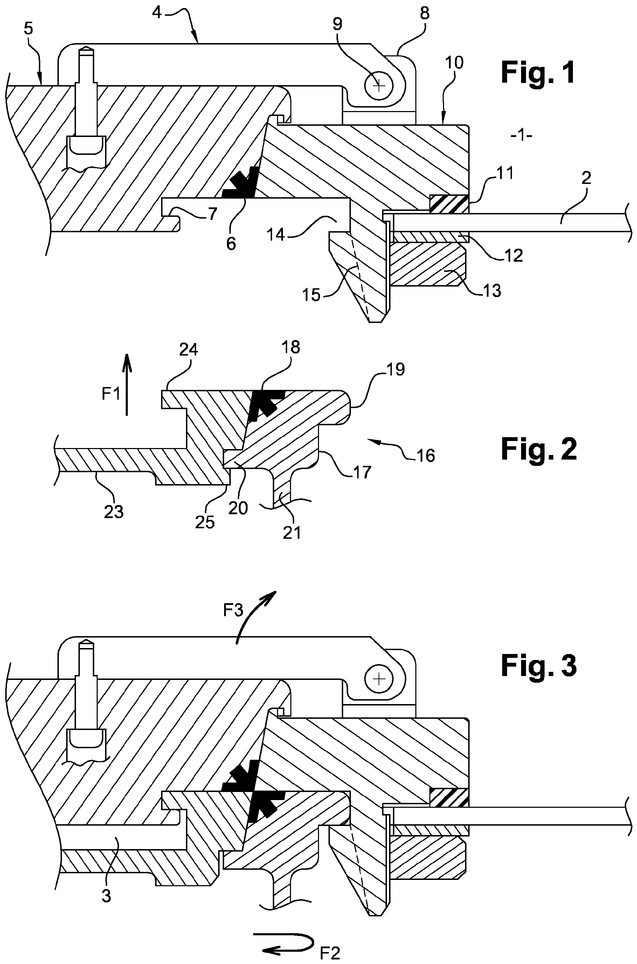

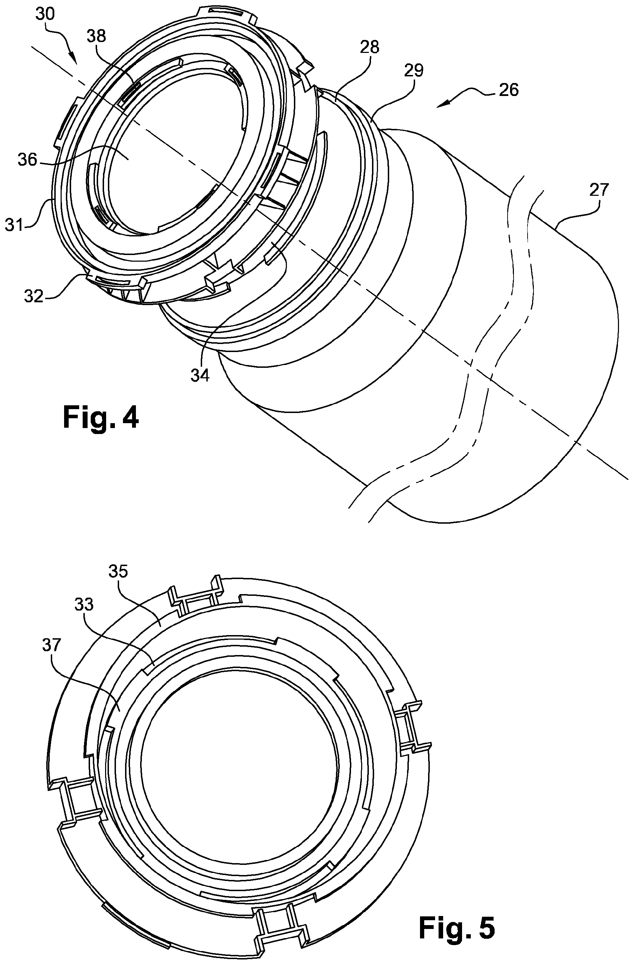

La figure 1 représente un ensemble de fabrication traditionnelle d'une bride et porte de cellule 4, la porte de cellule 5 en position fermée assure l'étanchéité avec la bride de cellule 10 par son joint 6, elle est munie d'une charnière 8 permettant son ouverture par une rotation autour de son axe 9. On remarque les oreilles 7 de la porte de cellule 4 en attente de recevoir les oreilles intérieures 24 de la porte de conteneur 23 voir figure 2. La bride de cellule 10 est montée de façon étanche sur la paroi 2 de la cellule, par son joint 11 plaqué sous l'action de l'écrou 13 et de ses vis de pressions (non représentées) plaquant la rondelle d'appui 12 sur la paroi 2. On remarque les oreilles extérieures 14 en attente de recevoir les oreilles 19 de la bride de conteneur 17 voir figure 2 lors de la connexion de 16 sur 4 et les pentes d'entrées 15 pour les oreilles extérieures 19 des brides de conteneurs : 17 et 31 correspondant à la bride de conteneur à oreilles auto-compensatrices des jeux 32 voir figures 4, et 5.
La figure 2 représente un ensemble de fabrication traditionnelle d'un conteneur 16 comprenant : a)- une bride de conteneur 17 comportant son joint 18 et son corps avec son fond 21 ce dernier peut être rapporté par soudage ou par bride avec un joint et vis, également la bride de conteneur peut se terminer par une virole avec bourrelet permettant le montage étanche d'un sac souple utilisé pour le transfert des composants des machines de conditionnement. La bride de conteneur possède des oreilles extérieures 19 permettant leur verrouillage sur les oreilles 14 de la bride de cellule 10 et des oreilles intérieures 24 permettant leur verrouillage sur les oreilles 7 de la porte de cellule 5.
La figure 3 représente l'ensemble conteneur connecté sur l'ensemble bride et porte de cellule.

La flèche F1 indique la phase d'approche de l'ensemble du conteneur 16 sur l'ensemble de la bride et porte de cellule 4.

La flèche F2 indique la phase de verrouillage par une rotation (d'environ 60°) pour des ensembles à quatre oreilles) de l'ensemble du conteneur 16 sur l'ensemble de la bride et porte de cellule 4. Dans le même mouvement de rotation a lieu le verrouillage du conteneur sur la bride de cellule entre les oreilles 19 sur les oreilles 14, le déverrouillage de la porte de conteneur de sa bride entre les oreilles intérieures 20 et les oreilles extérieures 25 et le verrouillage de la porte de conteneur par les oreilles intérieures 24 sur les oreilles 7 de la porte de cellule 5.

La flèche F3 indique l'ouverture de la double porte constituée de la porte de cellule 5 et de la porte de conteneur 23 on remarque que le volume inter-porte 3 est maintenu dans son état grâce au joint 6 appliqué sur la porte de conteneur 23. Le retour dans la position initiale s'effectue par le processus inverse.

Ces ensembles peuvent être réalisés en différentes matières : en acier inoxydable, en aluminium et en plastique rigide. Pour les grands volumes le corps du conteneur est remplacé par un sac en plastique souple. Pour respecter les tolérances de connexion du conteneur sur la bride cellule, cela impose la mise en adéquation des conditions d'élaborations et d'obtention des pièces de la jonction avec les tolérances de la jonction.

Dans le cas de conteneurs à usage unique et d'importante consommation, plusieurs milliers, ces derniers sont réalisés en partant d'une ébauche en matière plastique obtenue par injection, puis d'une reprise d'usinage de toutes les parties liées aux caractéristiques de la jonction: gorge de joint, portée de joint, et tous les éléments à cotes « tolérancées » liées aux caractéristiques mécaniques et d'étanchéités, etc..

Des conteneurs ont été réalisés en injection sans reprise d'usinage avec des tolérances d'injection, conformément à la norme NF T58-000 et en fonction de la classe de tolérance retenue (normale, réduite et de précision).Pour indication l'écart de tolérance en prenant une classe réduite est de l'ordre, pour un diamètre de 200mm, de 2,3 mm. On s'aperçoit que les jeux sont tels qu'ils ne permettent pas la garantie fonctionnelle de tels systèmes.

La présente invention a donc pour objet de remédier à cet inconvénient.

D'autre part, le document de brevet FR-A-2 986 364 décrit un système équivalent à celui du préambule de la revendication 1.

### OBJET DE L'INVENTION

La présente invention concerne un système permettant de s'affranchir du jeu radial provenant des inconvénients cités précédemment, liés aux tolérances d'injection. Elle permet l'utilisation de pièces réalisées par injection sans qu'elles soient reprises en usinage et de réaliser une connexion à jeux nuls d'un conteneur sur une bride de cellule, ce principe étant indépendant du nombre d'oreilles.

On pourrait envisager d'appliquer ce principe à des ensembles métalliques, ce qui permettrait dans ce cas d'élargir les tolérances de fabrication, diminuant les rebuts ainsi que leur coût.

Selon sa principale caractéristique les oreilles intérieures et les oreilles extérieures de la bride de conteneur possèdent une forme spéciale qui permet la récupération du jeu radiale et de recentrer, d'une part la bride de conteneur sur la bride de cellule et de l'autre part la porte de conteneur sur sa bride de conteneur. Il en est de même pour la porte de conteneur vis-à-vis de la porte de cellule, du fait que les oreilles intérieures de la porte de conteneur ont la même forme que celles intérieures de la bride de conteneur.

Concernant les têtes de conteneur à usage unique, l'élasticité propre de la matière est suffisante, pour les têtes de conteneur à usage multiple, un élément élastique est incorporé au centre de la forme spéciale, ce qui a pour effet de compenser le manque d'élasticité dû à la rémanence de la matière dans le temps.

En fait, l'objet principal de l'invention est un ensemble tel que défini dans la revendication 1, un conteneur avec sa bride de conteneur équipée de sa porte de conteneur, le conteneur devant être fixé sur une ouverture d'une autre entité, la bride de conteneur possédant au moins un jeu d'oreilles extérieures pour la fixation de l'ensemble conteneur comprenant la bride de conteneur et une porte de conteneur étant en une matière présentant une élasticité déterminée, les oreilles extérieures possèdent chacune un trou oblong définissant ainsi une partie externe de l'oreille extérieure de faible largeur et qui comporte une forme bombée vers l'extérieur, qui augmente le diamètre global extérieur de la bride de conteneur au niveau de l'oreille extérieure, chaque partie externe présentant de ce fait une flexibilité déterminée lui permettant de fléchir vers l'intérieur de la bride de conteneur sous la contrainte du diamètre de centrage à fond de gorge de la bride de cellule de ladite autre entité, lors de son engagement dans ses oreilles.

Une caractéristique complémentaire de l'invention est que la bride de conteneur comprend un jeu d'oreilles intérieures pour la fixation de cette bride de conteneur sur la porte de conteneur, possédant chacune un trou oblong, définissant une partie interne de l'oreille intérieure de faible largeur et qui comporte une forme bombée vers l'intérieur qui diminue le diamètre interne global de la bride de conteneur, chaque oreille intérieure présentant de ce fait une flexibilité déterminée lui permettant de fléchir vers l'extérieur du conteneur, sous la contrainte du diamètre de centrage à fond de gorge de la porte de conteneur, lors de son montage sur sa bride de conteneur.

De préférence, la porte de conteneur comprend un jeu d'oreilles intérieures pour sa fixation sur les oreilles de la porte de cellule de l'autre entité, possédant chacune un trou oblong définissant une partie interne vers l'intérieur, identique à la forme bombée de l'oreille qui diminue le diamètre interne de ces oreilles, chaque oreille intérieure présentant de ce fait une flexibilité déterminée lui permettant de fléchir vers l'extérieur de la porte de conteneur sous la contrainte du diamètre de centrage à fond de gorge des oreilles de la porte de cellule de l'autre entité, lors de l'accostage des deux entités.

Dans une réalisation préférentielle de l'invention, les parties bombées des oreilles extérieures et intérieures sont centrales par rapport à leur trou oblong respectif et sont moins longs que la longueur de leur trou oblong respectif.

Dans une application intéressante, l'autre entité est une cellule de confinement étanche possédant une bride de cellule, l'ensemble faisant partie d'un système de fermeture du type à double porte.

Dans une réalisation préférentielle de l'invention, une paroi extérieure du trou oblong de l'oreille extérieure présente une forme arquée en correspondance avec la forme bombée de la partie externe de l'oreille extérieure, de sorte que la partie externe a une largeur constante.

En correspondance, de préférence, une paroi interne du trou oblong de l'oreille intérieure présente une forme arquée en correspondance avec la forme bombée de la partie interne de l'oreille intérieure, de sorte que cette partie interne a une largeur constante.

Il est intéressant de placer un élément élastique dans chaque trou oblong des oreilles intérieures et extérieures pour palier à une éventuelle rémanence de la matière constituant la bride de conteneur.

Cet élément élastiquement, de préférence, une lame de ressort.

### LISTE DES FIGURES

L'invention et ses caractéristiques techniques seront mieux comprises à la lecture de la description suivante, accompagnée de plusieurs figures représentant respectivement :
- figure 1, un ensemble de fabrication traditionnelle d'une bride et d'une porte de cellule ;
- figure 2, un ensemble de fabrication traditionnelle d'un conteneur comprenant, entre autres, une bride de conteneur;
- figure 3, un ensemble de conteneur connecté sur un ensemble de bride et de porte de cellule correspondant ;
- figure 4, l'ensemble selon l'invention comprenant la bride de conteneur;
- figure 5, une vue de dessous de l'ensemble selon l'invention utilisant la bride de conteneur selon l'invention ;
- figure 6, la bride de conteneur selon l'invention ;
- figure 7, la bride de conteneur en perspective, vue de dessous ;
- figures 8A et 8B, en vue de dessus et à grande échelle, une oreille extérieure de la bride de conteneur selon l'invention ;
- figure 9, en vue de dessus et à grande échelle, une oreille intérieure de la bride de conteneur selon l'invention ;
- figure 10, en perspective de profil, la porte de conteneur ;
- figure 11, à grande échelle, une des oreilles intérieures de la porte de conteneur selon l'invention ;
- figure 12, à grande échelle, l'une des oreilles intérieures de la porte de conteneur dans l'utilisation de l'ensemble selon l'invention avec une cellule de confinement ;
- figure 13, une lame ressort de compensation utilisée conjointement avec l'ensemble selon l'invention ;
- figure 14, cette même lame de ressort à l'état libre ;
- figure 15, la lame de ressort en action.

### DESCRIPTION DETAILLEE D'UN MODE DE REALISATION DE L'INVENTION

Par principe, chaque oreille extérieure possède une forme bombée dont le diamètre extérieur est supérieur d'une valeur calculée à partir de la classe de tolérance d'injection. On peut citer par exemple que la tolérance d'injection est de + ou - 1mm pour un diamètre de 200mm et que la tolérance fonctionnelle est de - 0,1 à - 0,2 ; dans ce cas la cote sur oreille sera comprise entre 200 et 202, pour une cote nominale d'un diamètre de 201 + ou - 1mm. Dans ce cas chaque oreille doit fléchir au maximum de 1mm pour compenser cette différence dimensionnelle. Le même raisonnement est applicable pour les oreilles intérieures de la bride de conteneur et les oreilles intérieures de la porte de conteneur.

En référence aux figures 4 et 5, l'ensemble conteneur 30 en matière plastique est obtenu par injection sans retouche d'usinage grâce à des oreilles auto-compensatrices des jeux dû aux intervalles des tolérances d'injection. Il est composé d'une bride de conteneur 31 comprenant quatre oreilles extérieures 32 à rattrapage de jeu automatique, de quatre oreilles intérieures 33 à rattrapage de jeu, d'une virole 34 attenante à l'arrière de la bride de conteneur se terminant par un bourrelet 35 en quatre secteurs de maintien de sac, d'une porte de conteneur 36 comprenant quatre oreilles extérieures 37 et de quatre oreille intérieures 38 à rattrapage de jeu. D'un corps de conteneur, représenté par le sous-ensemble sac souple 26 comprenant un jonc de maintien 28 en haut de sac, du sac souple 27 et de son collier de fixation 29 sur la virole de la bride de conteneur.

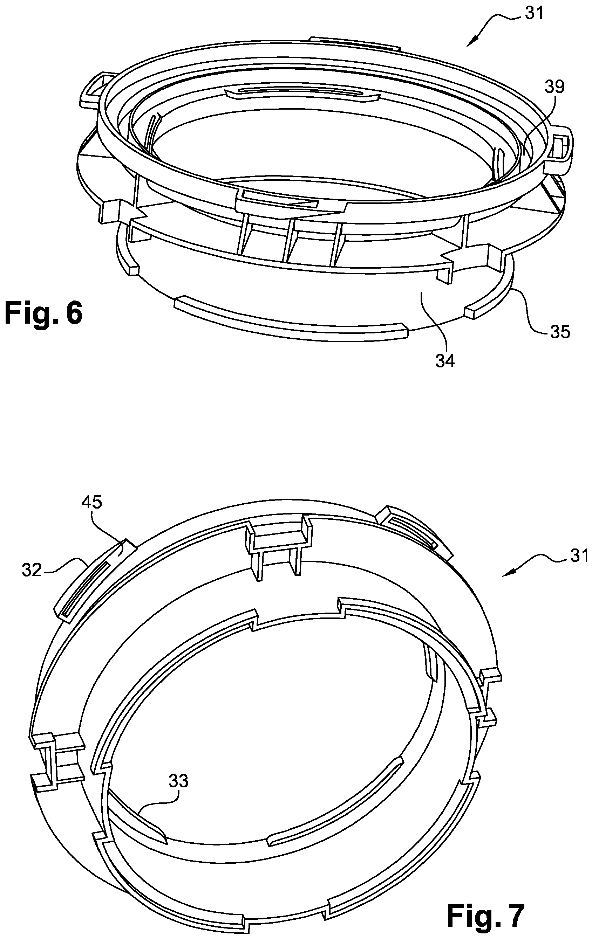

En référence à la figure 6, la bride de conteneur seule 31 sa gorge (39) reçoit le joint d'étanchéité non représenté, vue en perspective de dessus, permettant de mieux apprécier les détails.

La figure 7 permet de mieux apprécier les détails en particulier les quatre oreilles extérieures.

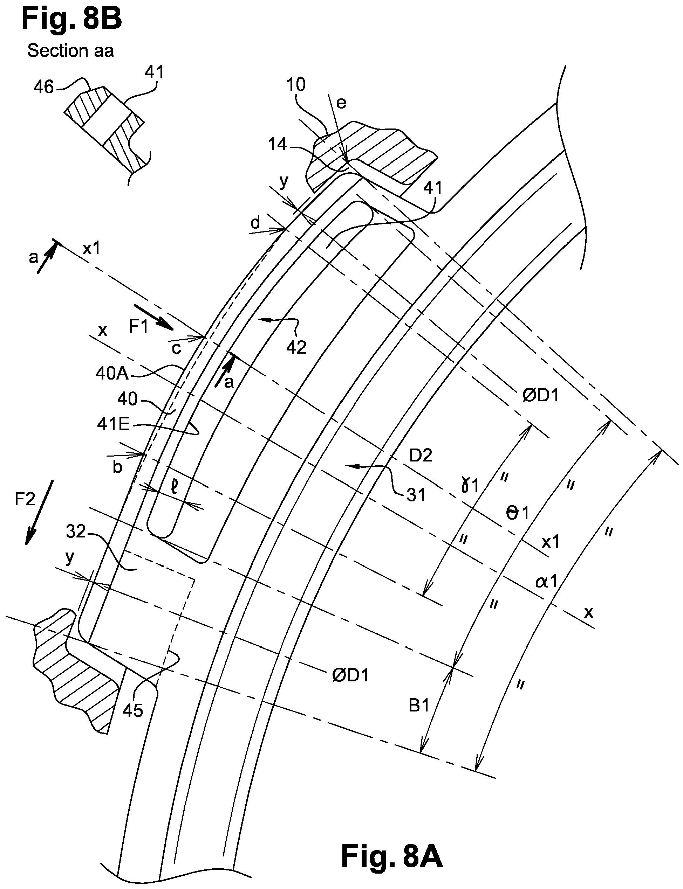

Les figures 8A et 8B représentent en vue de dessus et à grande échelle une des oreilles extérieures 32 de la bride de conteneur 31 engagée dans l'une des oreilles 14 de la bride de cellule 10, lors de son engagement axial sur la bride de cellule 10. Les oreilles extérieures 32 de la bride de conteneur 31 sur les pentes d'entrées 15 subissent une réaction radiale suivant la flèche F1 déformant les parties extérieures 40 des trous oblongs 41 suivant la déformée 42, récupérant les tolérances d'injection et réalisant un assemblage sans jeu. En effet, chaque partie extérieure 40 présente une forme bombée 40A. A noter lors de la rotation du au verrouillage suivant la flèche F2 de la bride de conteneur 31 sur la bride de cellule le frottement est faible. Les oreilles extérieures 32 qui auto-centrent la bride de conteneur sont en contact circonférentiel que sur le secteur de la déformée soit environ un tiers du secteur de l'oreille. La flèche de l'arc de cette déformée correspond à l'absorption de l'intervalle des tolérances d'injection additionnée de celles du standard de la jonction, des pièces concernées divisées par deux.

La figure 8A montre la réalisation de la forme géométrique particulière d'une oreille extérieure 32 de la bride de conteneur 31 permettant son verrouillage sur les oreilles 14 de la bride de cellule fixée sur la paroi 2 de la cellule. Le nombre minimum d'oreille est de trois,

Dans le cas ici décrit préférentiellement elles sont au nombre de quatre, rien n'empêche un nombre d'oreilles supérieur.

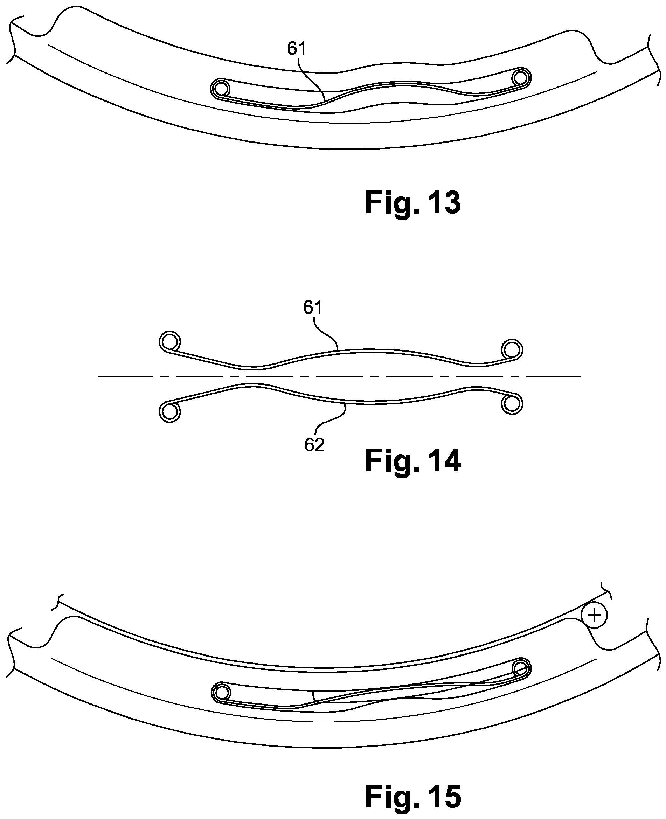

L'oreille a une largeur, à son sommet, correspondant à un premier angle α1 répartie par moitié par rapport à son axe X-X. Elle comprend les secteurs suivant :
a) Un premier secteur suivant un deuxième angle β1 qui permet de recevoir la pente d'entrée 45, voir figure 7, qui facilite l'engagement des oreilles de la bride de conteneur 32 dans celles 14 de la bride de cellule 10 et donne le départ du trou oblong 41.
b) Un deuxième secteur suivant un troisième angle θ1 délimitant la longueur d'un premier trou oblong 41, dont son axe est figure par la droite X1-X1.
c) Un troisième secteur délimité de la paroi extérieure 41E par a-b de diamètre D1 correspondant au diamètre intérieur des oreilles 14 de la bride de cellule 10 diminué de la tolérance d'injection de la bride de conteneur 31 augmenté de deux fois la valeur Y de la moitié de l'intervalle de tolérance diamétrale de la jonction entre la bride de cellule 14 et la bride de conteneur 31 injectée.
d) Un quatrième secteur de la paroi extérieure 41E délimité par b-d correspondant à une forme concave dont à son centre est symbolisé par l'axe X1-X1. Le diamètre D2 correspondant au diamètre intérieur des oreilles 14 de la bride de cellule 10 augmenté de la tolérance d'injection de la bride de conteneur 31 augmenté de deux fois la valeur de Y, Y correspondant à la moitié de l'intervalle de tolérance diamétrale de la jonction entre la bride de cellule 14 et la bride de conteneur 31. Ce secteur par du point b sur un diamètre D1 pour venir au point c sur un diamètre D2 dans l'axe X1-X1 pour revenir au point d sur le diamètre D1, déterminant une courbe progressive, la forme du trou oblong 41 suit cette courbe, la largeur de son évidement permet d'absorber la déformée 42 dû à la flexion de la paroi extérieur 40 sous l'effet d'une force suivant la direction de la flèche F et la possibilité de mettre en place une éventuelle lame ressort 61 voir figure 14, pour lutter contre une éventuelle rémanence de la paroi extérieur 40 du trou oblong 41.

Sur la section a-a de la figure 8B, le chanfrein 46 permet la pénétration des oreilles extérieures 32 de la bride de conteneur 31 dans les pentes d'entées 15 puis au fond des oreilles 14 de la bride de cellule 10 de la figure 1, le chanfrein 46 doit être au minimum égal ou supérieur à la valeur de la déformée 42 au point c de la paroi extérieur 40 du trou oblong 41. La compression des points c sur la bride de cellule crée un maintien naturel de la bride de conteneur sur sa bride de cellule aidant l'opérateur lors de l'opération de connexion.

Il est possible d'augmenter l'effet de ressort de la paroi extérieur de l'oblong en l'accompagnant d'une lame de ressort suivant le principe représenté sur les figures 13 à 15.

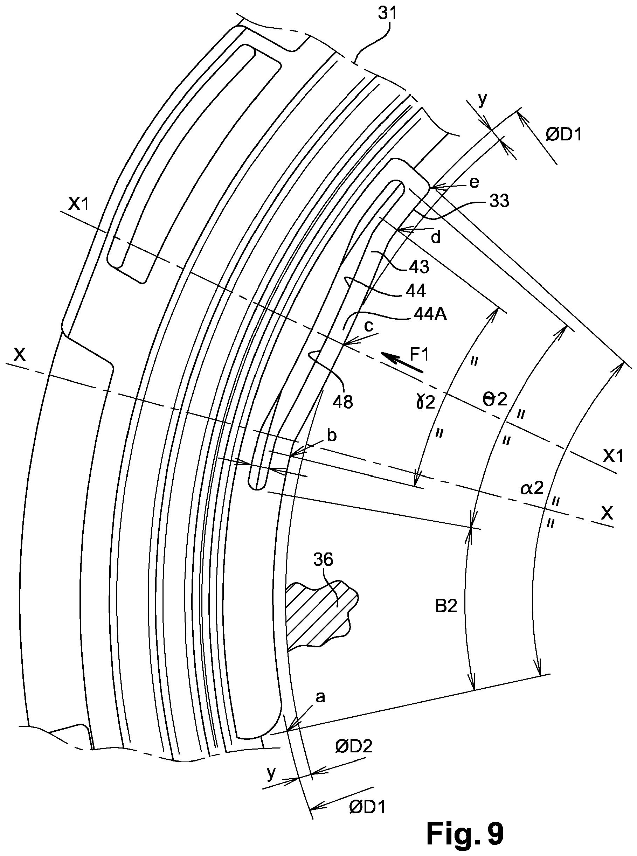

En référence à la figure 9 représentant en vue de dessus et à grande échelle une des oreilles intérieures 33 de la bride de conteneur 31 à l'état libre, on retrouve dans le même principe le trou oblong 52 et sa paroi 53 permettant une déformée suivant la flèche F1 au contact du fond de gorge 49 des oreilles extérieures 37 de la porte de conteneur 36. Le principe est identique à celui décrit pour la figure 8.

Sur cette figure 9 montre la réalisation de la forme géométrique particulière d'une oreille intérieure 33 de la bride de conteneur 31 permettant le verrouillage de sa porte de conteneur 36. Le nombre minimum d'oreilles est de trois, dans ici décrit préférentiellement elles sont au nombre de quatre, rien n'empêche un nombre d'oreilles supérieur.

L'oreille a une largeur, à son sommet, correspondant au premier angle α répartie par moitié par rapport à son axe X-X, elle comprend les secteurs suivant :
a) Un premier secteur suivant un deuxième angle β2 qui donne le départ d'un deuxième trou oblong 43.
b) Un deuxième secteur suivant un troisième angle θ2 délimitant la longueur du trou oblong du 43, dont son axe est figuré par la droite X1-X1.
c) Un troisième secteur de la partie intérieure 44 délimité par a-b de diamètre D1 correspondant au diamètre de fond de gorge 49 intérieur des oreilles 37 de la porte de conteneur 36 augmenté de la tolérance d'injection de la bride de conteneur 31 et de la porte de conteneur 36, le tout étant augmenté de deux fois la valeur Y correspondant à la moitié de l'intervalle de tolérance diamétrale de la jonction ente bride de conteneur et sa porte de conteneur.
d) Un quatrième secteur de la paroi intérieure 44 délimité par b-d présentant une forme bombée 44A dont son centre est symbolisé par l'axe X1-X1 d'entrée. Le diamètre D2 correspond au diamètre du fond de gorge 49 des oreilles 37 de la porte de conteneur 36 diminué de la tolérance d'injection de la porte de conteneur et de la bride de conteneur 31, le tout étant augmenté de deux fois la valeur de Y, Y correspondant à la moitié de l'intervalle de tolérance diamétrale de la jonction entre bride de conteneur 31 et sa porte de conteneur 36. Ce secteur part du point b sur un diamètre D1 pour venir au point c sur le diamètre D2 dans l'axe X1-X1 pour revenir au point d sur le diamètre D1, déterminant une courbe progressive, la forme du trou oblong 43 suit cette courbe. La largeur l de son évidement permet d'absorber la déformée 48 dû à la flexion de la paroi intérieur 44 sous l'effet d'une force suivant la direction de la flèche F1 et de la possibilité de mettre en place une éventuelle lame de ressort 61 voir la figure 14, pour lutter contre une éventuelle rémanence de la paroi intérieur 44 du trou oblong 43.

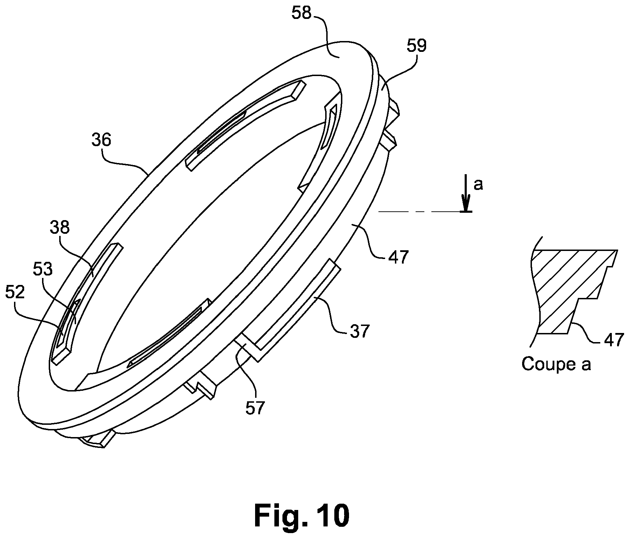

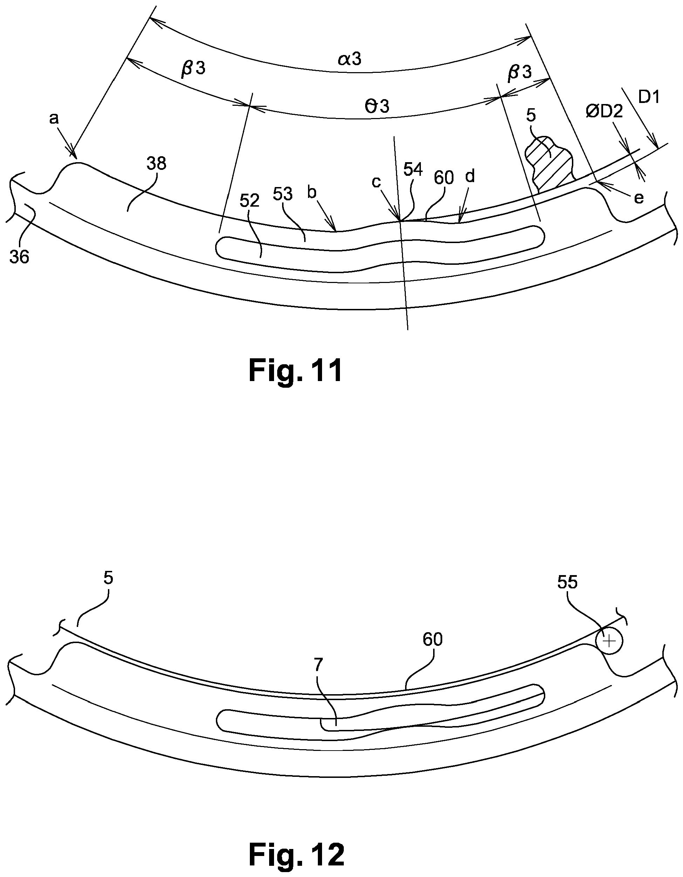

En référence à la figure 10 représentant en perspective de profil la porte de conteneur 36 d'injection, cette dernière comprend quatre oreilles intérieures 38 ayant chacune un oblong 52 avec sa paroi intérieure 53 permettant une déformée 54, voir figure 11 et 12, quatre oreilles extérieures 37 et leur pion d'arrêt 57 de fin de verrouillage de la porte de conteneur 36 sur sa bride de conteneur 31, les faces de contact avec les joints de la jonction ; la face 58 avec le joint 6 de la porte de cellule 5 et la face 59 avec le joint de la bride de conteneur 31. Le chanfrein 47 permet la pénétration de la porte de conteneur sur les oreilles intérieurs de la bride de conteneur, ce chanfrein doit être au minimum égale ou supérieur à la valeur de la déformée 48 au point c de la paroi intérieur 44 du trou oblong 43.

En référence à la figure 11 représentant à grande échelle l'une des oreilles intérieures 38 à l'état libre de la porte de conteneur 36, on remarque bien la déformée 54 représenté par le secteur 60 de la paroi intérieure 53 du trou oblong 52. Pour la description détaillée de la figure 11 concernant l'oreille intérieure et son trou oblong de la porte de conteneur, il faut se baser sur la description détaillée de la figure 9.

En référence à la figure 12 représentant à grande échelle l'une des oreilles 7 de la porte de cellule 5 verrouillée sur l'une des oreilles intérieures 38 de la porte de conteneur 36, en butée sur le pion 55 de la porte de cellule 5, on remarque la disparition de la déformée 54 sur le secteur permettant l'absorption des tolérances d'injection de la porte de conteneur 36.

En référence à la figure 13 représentant la lame ressort 61 de compensation de flexion de la paroi 43 logée dans le trou oblong 43 de la porte de conteneur 36. Il prend appui sur la paroi intérieure 43I du trou oblong 43. En effet, lorsque l'ensemble conteneur est à usage multiple, la partie externe 40 doit revenir dans sa position initiale malgré une éventuelle rémanence de la matière dans le temps.

En référence à la figure 14 représentant la lame de ressort 61 à l'état libre pour oreille intérieur et la lame de ressort 62 la symétrique à la lame de ressort 61 suivant l'axe X-X pour une oreille extérieur.

La figure 15 représente la lame de ressort 61 en action sous l'effet de l'oreille 7 de la porte de cellule 5.

**NOMENCLATURE**

| Repère numérique | Désignation |
|---|---|
| 1 | Intérieur de la cellule (boîte à gant, isolateur, enceinte) |
| 2 | Paroi |
| 3 | Volume inter-porte |
| 4 | Ensemble bride et porte de cellule |
| 5 | Porte de cellule |
| 6 | Joint de porte de cellule |
| 7 | Oreilles de porte de cellule/POCT |
| 8 | Charnière de porte de cellule |
| 9 | Axe de charnière |
| 10 | Bride de cellule |
| 11 | Joint de borde de cellule |
| 12 | Rondelle d'appui |
| 13 | Ecrou |
| 14 | Oreilles de bride de cellule |
| 15 | Pentes d'entrées des oreilles extérieures de la bride de cellule |
| 16 | Ensemble conteneur traditionnel |
| 17 | Bride de conteneur |
| 18 | Joint de bride de conteneur |
| 19 | Oreilles extérieures de bride de conteneur |
| 20 | Oreilles intérieures de bride de conteneur |
| 21 | Corps de conteneur |
| 22 | |
| 23 | Porte de conteneur |
| 24 | Oreilles intérieures de porte de conteneur |
| 25 | Oreilles extérieures de porte de conteneur |
| 26 | Sous ensemble sac souple |
| 27 | Sac souple |
| 28 | Zone de maintien |
| 29 | Collier de fixation |
| 30 | Ensemble conteneur à oreilles auto-compensatrice des jeux |
| 31 | Bride de conteneur à oreilles auto-compensatrice des jeux |
| 32 | extérieures de la bride de conteneur |
| 33 | intérieures de la bride de conteneur |
| 34 | Virole de la bride de conteneur |
| 35 | Bourrelets de viroles |
| 36 | Porte de conteneur |
| 37 | extérieures de la porte et de la bride de conteneur |
| 38 | intérieures de la porte et de la bride de conteneur |
| 39 | Gorge pour joint de la bride de conteneur |
| 40 | Partie extérieure du trou oblong 41 |
| 40A | Forme bombée |
| 41 | Trou oblong de l'oreille extérieure |
| 41E | Paroi extérieure du trou oblong 41 d'oreille extérieure 32 |
| 42 | Déformée de la paroi extérieure du trou oblong 41 |
| 43 | Trou oblong de l'oreille intérieure |
| 44 | Partie intérieure du trou oblong 43 |
| 44A | Forme bombée |
| 45 | Pente d'entrée oreille extérieure de la bride de conteneur |
| 46 | Chanfrein d'entrée oreille extérieure de la bride de conteneur |
| 47 | Chanfrein d'entrée oreille intérieure de la bride de conteneur |
| 48 | Déformée de la paroi intérieure du trou oblong |
| 49 | Fond de gorge des oreilles 37 (centrage sur les oreilles 38) |
| 52 | Oblong oreille intérieur de la porte de conteneur |
| 54 | Déformée de la paroi intérieure du oblong |
| 55 | Pion de porte de cellule d'arrêt de la porte de conteneur |
| 57 | Pion d'arrêt de fin de verrouillage |
| 58 | Face contact sur joint |
| 59 | Face contact sur joint de bride de conteneur |
| 60 | Secteur de la déformée |
| 61 | Lame de ressort de compensation de flexion |
| 62 | Lame de ressort de compensation de flexion |

## Revendications

1. Ensemble comprenant un conteneur, une bride de conteneur (31) et porte de conteneur (36), le conteneur devant être fixé sur une ouverture d'une autre entité comportant une bride et sa porte, la bride de conteneur (31) possédant au moins un jeu d'oreilles extérieures (32) pour la fixation de l'ensemble conteneur (30) comprenant la bride de conteneur (31) et une porte de conteneur (36) sur l'autre entité, la bride de conteneur (31) et la porte de conteneur (36) étant en une matière présentant une élasticité déterminée,
**caractérisé en ce que** lesdites oreilles extérieures (32) possèdent chacune un trou oblong (41) définissant une partie externe (40) de l'oreille extérieure (32) de faible largeur et qui comporte une forme bombée (40A) vers l'extérieur qui augmente le diamètre global extérieur de la bride de conteneur (31) au niveau de l'oreille extérieure (32), chaque partie externe (40) présentant de ce fait une flexibilité déterminée lui permettant de fléchir vers l'intérieur de la bride de conteneur (31) sous la contrainte du diamètre de centrage du fond de gorge (14) interne de ladite autre entité lors de l'accostage des deux entités.

2. Ensemble selon la revendication 1, **caractérisé en ce que** la bride de conteneur (31) comprend un jeu d'oreilles intérieures (33) pour sa fixation sur la porte de conteneur (36) possédant chacune un trou oblong (43) définissant une partie interne (44) de l'oreille intérieure (33) de faible largeur qui comporte une forme bombée (44A) vers l'intérieur qui diminue le diamètre interne global de la bride de conteneur (31) de chaque oreille intérieure (33) présentant de ce fait une flexibilité déterminée lui permettant de fléchir vers l'extérieur de la bride de conteneur (31) sous la contrainte du diamètre de centrage à fond de gorge (49) de ladite porte de conteneur (36) lors du montage dans sa bride de conteneur.

3. Ensemble selon l'une de revendications 1 ou 2 **caractérisé en ce que**, ladite autre entité étant une cellule, la porte de conteneur (36) comprend un jeu d'oreilles intérieures (38) pour sa fixation sur des oreilles (7) d'une porte de cellule (5) de l'autre entité possédant chacune un trou oblong (52) définissant une partie interne (54) vers l'intérieur, identique à la forme bombée (44A) de l'oreille intérieure (33) de la bride de conteneur (31) qui diminue le diamètre interne de ces oreilles, chaque oreille intérieure (38) de la porte de conteneur (36) présentant de ce fait une flexibilité déterminée lui permettant de fléchir vers l'extérieur de la porte de conteneur (36) sous la contrainte du diamètre de centrage à fond de gorge des oreilles (7) de la porte de cellule (5) de l'autre entité (4) lors de l'accostage des deux entités.

4. Ensemble selon la revendication 2, **caractérisé en ce que** les parties bombées (40A, 44A) des oreilles extérieures (32) et intérieures (33) de la bride de conteneur (31) sont centrales par rapport aux trous oblongs respectifs (41, 43) et sont moins longues que la longueur de leur trous oblongs respectifs (41, 43).

5. Ensemble selon la revendication 1, **caractérisé en ce que** la bride de conteneur (31) est utilisée avec ladite autre entité qui est une cellule de confinement étanche possédant une bride de cellule, l'ensemble faisant partie d'un système de fermeture du type à double porte.

6. Ensemble selon la revendication 1, **caractérisé en ce que** une paroi extérieure (41E) du trou oblong (41) de chaque oreille extérieure (32) de la bride de conteneur (31) présente une forme arquée en correspondance avec la forme bombée (40A) de la partie externe (40) de cette oreille extérieure (32), de sorte que cette partie externe (40) a une largeur constante.

7. Ensemble selon la revendication 2, **caractérisé en ce que** une paroi intérieure (43I) du trou oblong (43) de l'oreille intérieure (33) de la bride de conteneur (31) présente une forme arquée en correspondance avec la forme bombée (44A) de la partie interne (44) de l'oreille intérieure (33), de sorte que cette partie interne (44) a une largeur constante.

8. Ensemble selon les revendications 5 et 6, **caractérisé en ce qu'**un élément élastique est placé dans chaque trou oblong (41, 43) prenant appui sur la paroi extérieure (41E) ou intérieure (43I) du trou oblong.

9. Ensemble selon la revendication 8, **caractérisé en ce que** l'élément élastique est une lame de ressort (61, 62).

## Patentansprüche

1. Anordnung, umfassend einen Behälter, einen Behälterflansch (31) und eine Behältertür (36), wobei der Behälter an einer Öffnung einer anderen Einheit befestigt werden soll, die einen Flansch und dessen Tür umfasst, wobei der Behälterflansch (31) wenigstens einen Satz von äußeren Ohren (32) für die Befestigung der Behälteranordnung (30), umfassend den Behälterflansch (31) und eine Behältertür (36), an der anderen Einheit besitzt, wobei der Behälterflansch (31) und die Behältertür (36) aus einem Material gefertigt sind, das eine bestimmte Elastizität aufweist,
**dadurch gekennzeichnet, dass** die äußeren Ohren (32) jeweils ein Langloch (41) besitzen, das einen äußeren Teil (40) des äußeren Ohrs (32) mit geringer Breite definiert, und das eine nach außen gewölbte Form (40A) umfasst, die den globalen Außendurchmesser des Behälterflanschs (31) im Bereich des äußeren Ohrs (32) vergrößert, wobei jeder äußere Teil (40) aus diesem Grund eine bestimmte Flexibilität aufweist, die es ihm ermöglicht, sich zum Inneren des Behälterflanschs (31) unter Beanspruchung des Zentrierdurchmessers des inneren Kehlenbodens (14) der anderen Einheit während des Andockens der zwei Einheiten zu biegen.

2. Anordnung nach Anspruch 1, **dadurch gekennzeichnet, dass** der Behälterflansch (31) einen Satz von inneren Ohren (33) für seine Befestigung an der Behältertür (36) umfasst, die jeweils ein Langloch (43) besitzen, das einen inneren Teil (44) des inneren Ohrs (33) mit geringer Breite definiert, das eine nach innen gewölbte Form (44A) umfasst, die den globalen Innendurchmesser des Behälterflanschs (31) jedes inneren Ohrs (33) verringert, das aus diesem Grund eine bestimmte Flexibilität aufweist, die es ihm ermöglicht, sich zur Außenseite des Behälterflanschs (31) unter Beanspruchung des Zentrierdurchmessers am Kehlenboden (49) der Behältertür (36) während der Montage in dem Behälterflansch zu biegen.

3. Anordnung nach einem der Ansprüche 1 oder 2, **dadurch gekennzeichnet, dass** die andere Einheit eine Zelle ist und die Behältertür (36) einen Satz von inneren Ohren (38) für ihre Befestigung an den Ohren (7) einer Zellentür (5) der anderen Einheit umfasst, die jeweils ein Langloch (52) besitzen, das einen inneren Teil (54) nach innen definieren, identisch zu der gewölbten Form (44A) des inneren Ohrs (33) des Behälterflanschs (31), die den inneren Durchmesser dieser Ohren verringert, wobei jedes innere Ohr (38) der Behältertür (36) aus diesem Grund eine bestimmte Flexibilität aufweist, die es ihm ermöglicht, sich zur Außenseite der Behältertür (36) unter Beanspruchung des Zentrierdurchmessers am Kehlenboden der Ohren (7) der Zellentür (5) der anderen Einheit (4) während des Andockens der zwei Einheiten zu biegen.

4. Anordnung nach Anspruch 2, **dadurch gekennzeichnet, dass** die gewölbten Teile (40A, 44A) der äußeren Ohren (32) und der inneren Ohren (33) des Behälterflanschs (31) bezüglich der jeweiligen Langlöcher (41, 43) zentral sind, und weniger lang sind als die Länge ihrer jeweiligen Langlöcher (41, 43).

5. Anordnung nach Anspruch 1, **dadurch gekennzeichnet, dass** der Behälterflansch (31) zusammen mit der anderen Einheit verwendet wird, die eine dichte Einschlusszelle ist, die einen Zellenflansch besitzt, wobei die Anordnung Teil eines Schließsystems vom Typ mit doppelter Tür ist.

6. Anordnung nach Anspruch 1, **dadurch gekennzeichnet, dass** eine äußere Wand (41E) des Langlochs (41) jedes äußeren Ohrs (32) des Behälterflanschs (31) eine gebogene Form in Übereinstimmung mit der gewölbten Form (40A) des äußeren Teils (40) dieses äußeren Ohrs (32) derart aufweist, dass dieser äußere Teil (40) eine konstante Breite hat.

7. Anordnung nach Anspruch 2, **dadurch gekennzeichnet, dass** eine innere Wand (43I) des Langlochs (43) des inneren Ohrs (33) des Behälterflanschs (31) eine gebogene Form in Übereinstimmung mit der gewölbten Form (44A) des inneren Teils (44) des inneren Ohrs (33) derart aufweist, dass dieser innere Teil (44) eine konstante Breite hat.

8. Anordnung nach den Ansprüchen 5 und 6, **dadurch gekennzeichnet, dass** ein elastisches Element in jedem Langloch (41, 43) platziert ist und an der äußeren Wand (41E) oder inneren Wand (43I) des Langlochs anliegt.

9. Anordnung nach Anspruch 8, **dadurch gekennzeichnet, dass** das elastische Element eine Blattfeder (61, 62) ist.

## Claims

1. Assembly comprising a container, a container flange (31) and container door (36), the container having to be fastened to an opening of a further entity including a flange and a door, the container flange (31) having at least one set of external lugs (32) for fastening the container assembly (30) comprising the container flange (31) and a container door (36) on the other entity, the container flange (31) and the container door (36) being made of a material having a determined elasticity,
**characterised in that** said external lugs (32) have each an oblong hole (41) defining an outer part (40) of the external lug (32) of narrow width and which includes an outwardly rounded shape (40A) which increases the external overall diameter of the container flange (31) at the external lug (32), each outer part (40) having for this reason a determined flexibility enabling same to bend inwards in respect of the container flange (31) under the constraint of the centring diameter of the inner groove base (14) of said other entity when docking the two entities.

2. Assembly according to claim 1, **characterised in that** the container flange (31) comprises a set of internal lugs (33) for the fastening thereof to the container door (36) having each an oblong hole (43) defining an inner part (44) of the internal lug (33) of narrow width which includes an inwardly rounded shape (44A) which decreases the overall inner diameter of the container flange (31) of each internal lug (33) having for this reason a determined flexibility enabling same to bend outwards in respect of the container flange (31) under the constraint of the groove base (49) centring diameter of said container door (36) during mounting in the container flange thereof.

3. Assembly according to one of claims 1 or 2 **characterised in that**, said other entity being a cell, the container door (36) comprises a set of internal lugs (38) for the fastening thereof to lugs (7) of a cell door (5) of the other entity having an oblong hole (52) defining an inward inner part (54), identical to the rounded shape (44A) of the internal lug (33) of the container flange (31) which decreases the inner diameter of these lugs, each internal lug (38) of the container door (38) having for this reason a determined flexibility enabling same to bend outwards in respect of the container door (36) under the constraint of the groove base centring diameter of the lugs (7) of the cell door (5) of the other entity (4) when docking the two entities.

4. Assembly according to claim 2, **characterised in that** the rounded parts (40A, 44A) of the external (32) and internal (33) lugs of the container flange (31) are central with respect to the respective oblong holes (41, 43) and are not as long as the length of the respective oblong holes (41, 43) thereof.

5. Assembly according to claim 1, **characterised in that** the container flange (31) is used with said other entity which is a sealed confinement cell having a cell flange, the assembly being part of a double-door type closure system.

6. Assembly according to claim 1, **characterised in that** an external wall (41E) of the oblong hole (41) of each external lug (32) of the container flange (31) has an arched shape corresponding with the rounded shape (40A) of the outer part (40) of this external lug (32), such that this outer part (40) has a constant width.

7. Assembly according to claim 2, **characterised in that** an internal wall (431) of the oblong hole (43) of the internal lug (33) of the container flange (31) has an arched shape corresponding with the rounded shape (44A) of the inner part (44) of the internal lug (33), such that this inner part (44) has a constant width.

8. Assembly according to claims 5 and 6, **characterised in that** an elastic element is placed in each oblong hole (41, 43) pressing on the external (41E) and internal (431) wall of the oblong hole.

9. Assembly according to claim 8, **characterised in that** the elastic element is a spring leaf (61, 62).
